Europäisches Patentamt

(19) European Patent Office

Office européen des brevets

(11) Publication number: **0 206 343**
**B1**

(12) **EUROPEAN PATENT SPECIFICATION**

(45) Date of publication of patent specification: **13.12.89**

(21) Application number: **86108733.6**

(22) Date of filing: **26.06.86**

(51) Int. Cl.⁴: **D 21 H 3/82, B 65 D 81/24**

(54) **Sheet-like, oxygen-scavenging agent.**

(30) Priority: **26.06.85 JP 139687/85**
**17.07.85 JP 157640/85**
**20.11.85 JP 258644/85**
**26.12.85 JP 291939/85**

(43) Date of publication of application:
**30.12.86 Bulletin 86/52**

(45) Publication of the grant of the patent:
**13.12.89 Bulletin 89/50**

(84) Designated Contracting States:
**DE FR GB NL**

(56) References cited:
**EP-A-0 036 575**
**DE-A-3 047 285**
**FR-A- 767 561**
**FR-A-2 448 488**
**US-A-4 485 133**

(73) Proprietor: **MITSUBISHI GAS CHEMICAL COMPANY, INC.**
**5-2, Marunouchi 2-chome Chiyoda-Ku**
**Tokyo, 100 (JP)**

(72) Inventor: **Inoue, Yoshiaki**
**2-14-20, Minamimizumoto Katsushika-ku**
**Tokyo (JP)**

(74) Representative: **Popp, Eugen, Dr. et al**
**MEISSNER, BOLTE & PARTNER**
**Widenmayerstrasse 48 Postfach 86 06 24**
**D-8000 München 86 (DE)**

Courier Press, Leamington Spa, England.

# EP 0 206 343 B1

## Description

The present invention relates to a sheet-like oxygen-scavenging agent and a method for manufacturing the same.

From FR—A—767 561 a sheet-like mass prepared by paper-making from a mixture comprising fibrous material, iron powder and a electrolyte (aluminium sulphate) is known. Further, it appears that the said mass also contains at least a small amount of water. However, quite apparently this sheet-like mass has never been earmarked as an oxygen-scavenging agent. Therefore, to date an oxygen scavenging agent is available which is mainly composed of iron powder or organic reductive substance and marketed in the form filled in a small bag which is composed by permeable material. This small bag containing the oxygen scavenging agent is sealed in a gas barrier package for food to absorb gas within the package, thereby ensuring the preservative storage of food.

This conventional oxygen scavenging agent contained in a small bag is accompanied with the undermentioned drawbacks:

(1)  Since the packed oxygen scavenging agent is sealed in a package together with food, the risk is that the consumer may eat the oxygen scavenging agent together with the food by mistake.

(2)  Since this small back type oxygen scavenger cannot be made into an extremely small size, it is hardly applicable to a package having a small inner space.

(3)  If a food container has a small lid, the oxygen scavenger cannot be put and fixed in place.

(4)  If a package has a small length as about 30 mm, the oxygen scavenger cannot be put therein.

(5)  When an oxygen scavenger is to be fixed within a tray the oxygen scavenger having a certain thickness causes an increase in height of the tray and also securely fixing the oxygen scavenger in place.

(6)  The oxygen scavenging powder filled in a bag tends to coagulate into a lumpy shape and is reduced in a surface area contacting air. To realize the scavenging of oxygen at a desired rate, therefore, it is necessary to provide a far larger quantity of oxygen scavenging powder than the latent oxygen scavenging capacity.

In view of the above referred to prior art the inventor has conducted a profound study for eliminating the drawbacks accompanying the conventional oxygen scavenger, i.e. to provide an oxygen scavenger which is not only easy to handle, but also long-term effective.

To attain the above-mentioned object, the present invention provides a sheet-like oxygen scavenger which is prepared by paper-making from a mixture of fibrous material, iron powder, water and electrolytic material, wherein more than 50% of the iron powder has a particle size of less than 0.05 mm.

Further, the present invention is intended to provide a method of manufacturing such a sheet-like oxygen scavenger.

This method includes the steps of suspending fibrous material, iron powder, water and electrolytic material to the extent of solid concentration ranging between 0.5 and 15% wherein more than 50% of the iron powder is less than 0.05 mm in particle size; and filtering said suspension liquid; dehydrating the liquid to not more than 50% of water content, thereby fabricating the dehydrated mass into a sheet.

This invention can be more fully understood from the following detailed description when taken in conjunction with the accompanying drawings, in which:

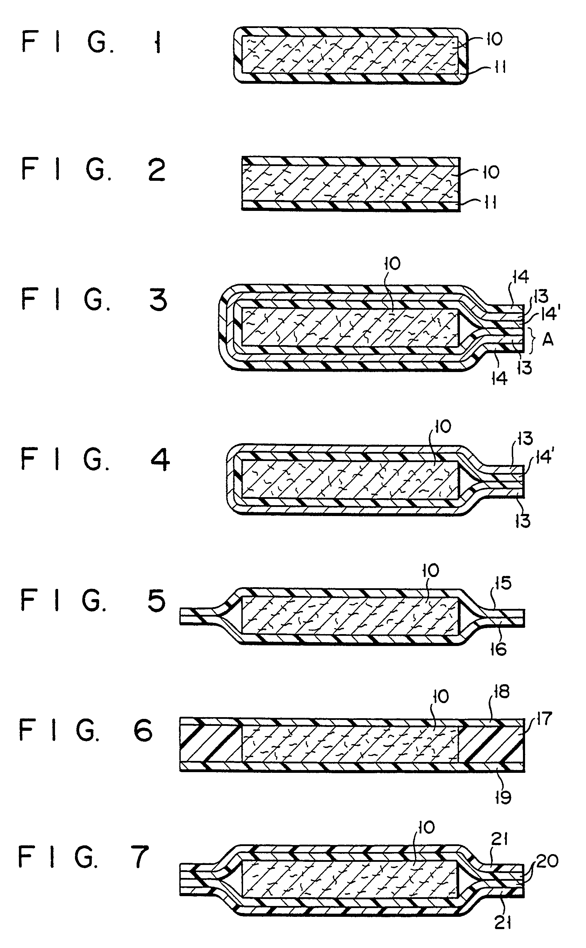

Fig. 1 to 7 are sectional views illustrating various modifications of a sheet-like oxygen scavenger embodying this invention.

According to this invention, fibrous material is used as a carrier of iron powder, water and electrolytic material, and intended to broaden a contact area between iron and atmospheric air and to improve the permeability of oxygen. The fibrous material is prepared from natural or synthetic fiber, and is preferred to have a smaller width than 0.2 mm and a length ranging between 0.1 and 20 mm. Said fibrous material may be composed of pulp, acrylic fiber, nylon fiber, viscose rayon fiber, vinylon fiber, polyvinyl chloride fiber, polyethylene fiber, polypropylene fiber, etylene-vinylacetate copolymer fiber, polyester fiber, cotton, hemp, wool, asbestos fiber or a mixture of these fibers. Preferable examples of the fibrous material are pulp, polyethylene fiber and hemp. Two or more of these fibres may be used in combination.

The kind of iron powder used as the main component of the subject oxygen scavenger is not subject to any particular limitation, provided it has a capacity to absorb oxygen gas. Concretely, however, the subject iron powder is composed of, for example, reduced iron powder, atomized iron powder or electrolytic iron powder.

To attain a thorough mixture of iron powder with fibrous material, it is desired that the iron powder should generally have a particle size less than 0.25 mm or preferably less than 0.15 mm. The ratio of iron powder having a particle size less than 0.05 mm should account for more than 50% or more preferably more than 70%. If the ratio of the iron powder less than 0.05 mm in particle size is less than 50%, the ratio of the iron powder separating from the fibrous material may be unacceptably increased. So, the sheet-like oxygen scavenger could not effectively hold iron powder.

The electrolytic material generally accepted for the subject purpose is represented by, for example, those which can accelerate the oxygen scavenging rate of iron powder. Said electrolytic-material includes, for instance, sulfates, halogen compounds, carbonates and hydroxides. Preferable among these salts are halogen compounds, and more preferable are $NaCl$, $CaCl_2$, $MgCl_2$, $FeCl_2$ and $FeCl_2$. It is preferred that these salts are applied in the form dissolved in water.

2

The indispensable components of an oxygen scavenger embodying this invention are fibrous material, iron powder, water and electrolytic material. However, it is possible to add a sizing agent applied in paper making, loading, coloring material, paper-reinforcing agent, water-repellent and oil-repellent, etc. in a proper amount. The gas permeability of the sheet-like oxygen scavenger is selected to less than 50,000 sec/ air 100 ml, preferably less than 5000 sec/air 100 ml in Gurley type air permeability as defined in JIS P—8117. When the value of the gas permeability of the sheet-like oxygen scavenger is more than 50,000 sec/air 100 ml, the rate of scavenging oxygen may be too small to employ in a practical application.

The oxygen scavenger of the present invention. is prepared in the sheet form by the steps of suspending the predetermined quantity of fibrous material, iron powder, water and electrolytic material, and the filtering the suspended solid to dehydrate it to have a water content of less than 50 weight % or preferably less than 40 weight %, thereby forming a sheet-like material. The solid concentration in the suspension should be controlled to range between 0.5 and 15% or preferably 1 and 9%. The concentration of the fibrous material in the suspension is desired to range from 0.01 to 12%, or more preferably from 0.1 to 3% based on the total weight of fibrous material, iron powder, water and electrolytic material. The content of the iron powder should be controlled to range from 0.045 to 12 weight %, or preferably 0.1 to 3 weight % based on the total of the fibrous material, iron powder, water and electrolytic material. The electrolytic material is generally applied in the form dissolved in water. The concentration of this electrolytic material is desired to range between 0.05 and 30 weight %, or more preferably between 0.1 and 10 weight %. The definition of solid material should be understood to include any material which does not dissolve in an aqueous solution.

Description may now be made of an example of the method of manufacturing a sheet-like oxygen scavenger embodying this invention. First, a fibrous material is suspended by means of a pulper in an aqueous solution of an electrolytic material. Later the suspended mass is split into fine particles by tapping it with a refiner, and then, mixed with iron powder. If necessary other additives may be added thereto. The whole mixture is again suspended, and the suspension is introduced into a paper machine and screened through the wire cloth. The fibrous material which has been filled out is suctioned and then dehydrated by press. A sheet-like oxygen scavenger obtained in this manner will generally have a water content ranging between 10 and 50%, or preferably between 20 and 40%. It is possible to let the sheet pass through a drier to make it in a dried state. The dried sheet-like oxygen scavenger is adapted for the stable storage of foods having a high water content.

In the sheet-like oxygen scavenger thus prepared, the iron powder will generally account for 10 to 5000 parts by weight per 100 parts by weight of the fibrous material, or preferably ranges between 10 to 1000 parts by weight. The electrolytic material will generally range between 0.01 and 900 parts by weight or preferably between 0.02 and 100 parts by weight per 100 parts by weight of the fibrous material. The water content ranges 0.1 to 1,200 parts by weight, or preferably 1 to 400 parts by weight per 100 weight parts of the fibrous material. As used herein, the sheet-like oxygen scavenger of the present invention is defined to mean an article having a thickness ranging between 0.01 and 10 mm, or preferably between 0.1 and 5 mm.

The sheet-like oxygen scavenger of the present invention can be applied in the form of a sheet filtered and dehydrated and, if necessary, dried, while being sealed in a vessel having a good gas barrier property together, for example, foods or other articles. Further when coated with or wrapped in a film, the sheet-like oxygen scavenger can be isolated from, for example, foods held in the vessel, thereby preventing the components of said sheet-like oxygen scavenger from being carried into, for example, foods, resulting in their contamination.

For example, the surface of the sheet-like oxygen scavenger 10 is overlayed with a layer 11 prepared from oxygen-permeable resin (Figs. 1 and 2). No limitation is imposed on the kind of resin applicable for the above-mentioned object, provided it constitutes an emulsion in water or an organic solvent. Specifically, the following resinous material can be applied to this end: resin of polyvinyl chloride series, acrylic series, silicone series, silicone-acrylic series, polyethylene series, polyamide series, polyester series, polypropylene series in a single or copolymerized form or blend form. Among the above-listed materials, polyvinyl chloride, polyethylene, silicone and silicone-acrylic rersins are most preferred for practical application.

Covering of the oxygen scavenger with a resin can be conducted in various ways. For example the sheet-like oxygen scavenger is first dipped in an emulsion of any of the above-listed resinous substances, and later the whole mass is dried so as to cause the oxygen scavenger to be wrapped in a resinous material. For the object of the present invention, the resin wrapper can be applied to have a thickness ranging between 0.1 and 1000 μm, or preferably between 1 and 500 microns. The oxygen-permeating rate of the resin wrapper is generally confined to be more than $1157.10^{-9}$ m$^3$/m$^2$.s or preferably $11570.10^{-9}$ m$^3$/m$^2$.s. Further, it is possible to wrap subject sheet-like oxygen scavenger 10 in a film, sheet or laminate film having a larger oxygen-permeating rate than $1157.10^{-9}$ m$^3$/m$^2$.s. Fig. 3 illustrates the concrete example of sheet-like oxygen scavenger 10 wrapped in a laminate film. In the case of Fig. 3, wrapper "A" is formed of sheet 13 of paper or non-woven fabric or microporous film covered on the upper and lower surfaces with plastics films 14, 14' which have many small pores. The sheet 13 may be covered only on one surface thereof with the plastic film 14' as shown in Fig. 4. Wrapper "A" is folded in two, and sheet-like oxygen scavenger 10 having a smaller size than wrapper "A" is interposed between the folded portions. Later the peripheral edge of wrapper "A" is thermally sealed to obtain the oxygen scavenger.

3

It is further possible, as shown in Fig. 5, to cover one side of sheet-like oxygen scavenger 10 with air-permeable sheet 15 such as paper, non-woven fabric, synthetic pulp sheet or microporous film and cover the other side of said oxygen scavenger 10 with plastics film 16, and heat-seal the periphery of the laminated sheet so as to completely surround the oxygen scavenger 10.

In the above-mentioned cases, it is preferred that plastics film applied as sealing material be prepared from a material having a low melting point such as polyethylene.

Non-woven fabric may be suitably prepared by the wet dry process or from the spun bond. However, particularly preferred from the standpoint of waterproofness is non-woven polyethylene fabric, TYVEK (trademark, manufactured by Du Pont) or ALT (trademark, manufactured by Awa Paper-Manufacutring Co.). By the term "microporous film" is meant a plastic film having a plurality of very fine openings and a Gurley type air permeability of 0.01 to 10,000 sec/air 100 ml, which under the atmospheric pressure does not permit water to pass therethrough. The microporous film employed in this invention may be prepared by processing plastic films such as polyethylene, polypropylene and polyethylene fluoride films, i.e. cold orientation of film; orientation of different substance-containing film; extraction of different substance from different substance-containing film; extraction of different substance-containing film, followed by orientating the so-treated film; laminating of non-woven fabrics; cross dispersing of bundle of fibres, followed by heat-pressing the resulting material; and irradiation of film with electron beam. For example, suitable microporous films are commercially available, and are sold under the names Celgard (Celanese Corp.), FP—2 (Asahi Chemical Industry), NF sheet (Tokuyama Soda Chemical Co.).

When both sides of the non-woven fabric or microporous film are laminated with plastics film, the film covering the outer side of said non-woven fabric or microporous film should preferably be formed of polyethylene terephthalate/polyethylene, nylon/polyethylene or orientated polypropylene/polyethylene. The thickness of the wrapper may not be restricted, but generally a thickness of less than 10 mm, more preferably less than 5 mm would be appropriate.

At least a portion of the wrapper of the sheet-like oxygen scavenger is preferred to have a larger oxygen permeability than $1157.10^{-9}$ m³/m².s. The preferred wrapper includes the aforementioned paper, non-woven fabric, microporous film and sheet laminated on one surface or both surfaces of the paper, non-woven fabric or microporous film with an plastic film which has many small pores or a reinforcing sheet such as Nisseki Warifu (trademark, Nisseki Jushi Products Co.), Diacloth (trademark, Diatex Co.), Crenet (trademark, Kurare Co.), or Sofunet (trademark, Shin-nihon Sofu Co.). Films of polyethylene, polypropylene, ethylene-vinyl acetate copolymer, polybutadiene, polyethylene ionomer, polymethyl pentene and silicone resin may also be employed.

Further a shown in Fig. 6, it is possible to surround the periphery of sheet-like oxygen scavenger 10 with low-melting point resin 17 having a thickness ranging, for example, between 3 and 10 mm, and laminate both sides of said sheet-like oxygen scavenger 10 with films or sheets 18, 19 including the aforesaid air-permeating wrapping material. This process is preferred, because the components of sheet-like oxygen scavenger 10 are prevented from oozing out.

In the above-mentioned case, the low-melting point resin may be provided, for example, from polyethylene, polypropylene, polyethylene ionomer, ethylene-vinyl acetate copolymer.

Further as shown in Fig. 7, it is possible to provide the wrapper from air-permeating laminate film whose inner plies consist of the aforesaid low-melting resin layers 20 and wherein sheet-like oxygen scavenger 10 is interfaced between said inner plies. Ultimately, the wrapper is thermally sealed along the periphery to provide a laminate film structure. The outermost ply 21 of the laminate film structure may be suitably formed of the aforesaid air-permeating film or sheet. In the case of Fig. 7, too, low-melting point resin layers 20 of the laminate film structure are thermally sealed together, preventing the contents of the subject oxygen scavenger from oozing out.

The fabrication of the above-mentioned film laminate structure is generally performed by, for example, thermal lamination, dry lamination, wet lamination and extruder lamination.

The sheet-like oxygen scavenger of the present invention offers the following advantages:

(1) The subject oxygen scavenger which can be securely fitted to the inside of a food container or package is prevented from being eaten by mistake.

(2) The oxygen scavenger can be applied in the bent or art form in accrdance with the inner space of container.

(3) It is possible to prevent soils such as rust from oozing out from the oxygen scavenger.

(4) The subject sheet-like oxygen scavenger is excellent in gas-permeability, so that oxygen gas in a package is effectively passed through and contact with the oxygen scavenger, and therefore excellent in oxygen-scavenging rate and oxygen-absorption capability.

(5) The sheet-like oxygen scavenger can be produced in more compact as compared with the conventional bag-like oxygen scavenger, without reducing the oxygen scavenging capacity, and therefore is practically advantageous.

## Examples

This invention will become more apparent with reference to the examples which follow.

### Example 1

·100 g of conifer pulp mainly consisting of cellulosic fibers measuring 2—7 mm in length and 0.03 to 0.05 mm in width, 350 g iron powder having more than 80% of a smaller particle size than 0.05 mm and 60 g NaCl where suspended in 7,000 ml of water. The suspension thus prepared was taken into a circular filtration paper dish having a diameter of 600 mm subjected to filtration by suction. Immediately afterwards, the oxygen scavenger containing 40% of water was roll-pressed to the water content of 30%.

A sheet-like oxygen scavenger thus prepared had a thickness of 1.5 mm, and was composed of 350 parts by weight of iron powder, 2 parts by weight of NaCl and 195 parts by weight of water as against 100 parts by weight of pulp.

### Example 2

The sheet-like oxygen scavenger obtained in Example 1 was cut into a chip measuring 9 × 9 cm. The scavenger was sealed in a container containing 1 l of air and having a relative humidity of 100% at a temperature of 25°C. In 12 hours the oxygen content in the container was reduced to less than 0.1%, proving that an oxygen scavenging rate of the sheet-like scavenger was sufficiently high for practical application.

### Example 3

The sheet-like product prepared in Example 1 was dried in a drying chamber to reduce the water content to 2.1%, thereby to obtain a sheet-like oxygen scavenger having a thickness of 1.4 mm. This oxygen scavenger was composed of 100 weight parts of pulp, 350 weight parts of iron powder, 2 parts of NaCl and 9.7 weight parts of water.

### Example 4

The sheet-like oxygen scavenger obtained in Example 3 was cut into a chip measuring 9 × 9 cm. The scavenger was sealed in a container containing 1 l of air and having a relative humidity of 100% at a temperature of 25°C. In 15 hours the oxygen content in the container was reduced to 0.1%, proving that an oxygen scavenging rate of the sheet-like scavenger was sufficiently high for practical application.

### Example 5

A sheet-like oxygen scavenger was prepared from a different kind of fibrous material, iron powder having a different particle size and a different kind of electrolytic material from those applied in Example 1 and Example 3 in the same manner as described therein. The sheet-like oxygen scavenger thus fabricated was cut in the form of 9 × 9 cm. The sheet was sealed in a container containing 1 liter of air and having a relative humidity of 100% at a temperature of 25°C, the results being set forth in Table 1 below.

## Table 1

| Fibrous material | | Conifer pulp | Conifer pulp | Polyethlene fiber having a width of 0.1 mm and a length of 5 to 15 mm | A mixture of 50 g of conifer pulp and 50 g of poly-ethylene fiber |
|---|---|---|---|---|---|
| Iron powder (1) | Particle size: less than 0.15 mm | 100 % | 100 % | 100 % | 100 % |
| | particle size: less than 0.05 mm | 80 % | 60 % | 80 % | 80 % |
| Electrolyte | | $CaCl_2$ | NaCl | NaCl | NaCl |
| Dehydrating step | | press | press | press | press |
| Physical Characteristics of sheet-like oxygen scavenger | Thickness (mm) | 1.5 | 1.4 | 1.4 | 1.5 |
| | Water content (%) | 37 | 35 | 30 | 25 |
| | Gas permeability (2) | 2 | 2 | 4 | 4 |
| | Time required to reduce oxygen content to 0.1 % (hrs) | 12 | 12 | 16 | 15 |

EP 0 206 343 B1

| Fibrous material | | Conifer pulp | Polyethlene fiber having a width of 0.1 mm and a length of 5 to 15 mm | A mixture of 50 g of conifer pulp and 50 g of polyethylene fiber |
|---|---|---|---|---|
| Iron powder (1) | Particle size: less than 0.15 mm | 100 % | 100 % | 100 % |
| | particle size: less than 0.05 mm | 60 % | 80 % | 80 % |
| Electrolyte | | NaCl | NaCl | NaCl |
| Dehydrating step | | press and dry | press and dry | press and dry |
| Physical Characteristics of sheet-like oxygen scavenger | Thickness (mm) | 1.4 | 1.5 | 1.5 |
| | Water content (%) | 3.0 | 1.2 | 1.2 |
| | Gas permeability (2) | 2 | 4 | 4 |
| | Time required to reduce oxygen content to 0.1 % (hrs) | 19 | 22 | 20 |

* (1) Ratio occupied by iron powder less than 0.15 mm and iron powder less than 0.05 mm in particle size.

(2) Gurley type air permeability: (sec/air 100 ml)

EP 0 206 343 B1

### Example 6

A sheet-like oxygen scavenger prepared in Example 1 was cut into 9 cm in length and 9 cm in width. An emulsion of silicone acrylic resin was coated on the surface of said sheet. The emulsion was dried at 90°C, to coat 10 g/m² of fine-orificed silicon acrylic resin layer. The thickness of the coated layer was 10 μm. The sheet-like oxygen scavenger thus fabricated was sealed in a gas barrier bag together with rice cakes weighing 0.5 kg in total and 0.5 l of air. The sealed mass was held at a temperature of 25°C. The oxygen concentration in the bag was reduced to 0.1% in less than 12 hours. Later, the sealed mass was stored in the bag at 25°C for one month, but no rust oozed out from the oxygen scavenger on to the rice cake pieces, which were consequently stored in a satisfactory condition.

### Example 7

A 3-ply sheet-like oxygen scavenger was fabricated as follows.

First, a polyethylene telephthalate film of 12 μm in thickness and a polyethylene film 45 μm in thickness were laminated on one surface of the sheet-like product obtained in Example 1, which was cut into a chip 5 cm × 9 cm in size. Then TYVEK, a non-woven polyethylene sheet, which had the same size, was laminated on the other surface of the sheet-like product. This laminate composite was heated at a temperature of 135°C under pressure for 5 minutes to obtain a 3-ply oxygen scavenger.

This oxygen scavenger was sealed in a container containing 0.5 l of air, and kept at a temperature of 25°C. As a result, the oxygen concentration within the container was reduced to less than 0.1% in 10 hours.

### Example 8

Measurement was made of the oxygen scavenging capacity of the 3-ply oxygen scavengers fabricated under the same conditions as in Example 7, the results being set forth in Table 2 below.

8

Table 2

| No. of samples | Outer ply (coated on one side of the inmost ply) | Outer ply (coated on the other side of the inmost ply) | Number of hours required for 0.1 % oxygen concentration to be attained (hr) |
|---|---|---|---|
| 1 | Paper/porous PE | PET/PE | 21 |
| 2 | TYVEK | Nylon/PE | 9 |
| 3 | PP non-woven fabric | PET/PE | 10 |
| 4 | PP non-woven fabric | Nylon/PE | 10 |
| 5 | Paper/Warifu/ porous PE | PE non-woven fabric (TYVEK) | 8 |

PET: Polyethylene telephthalate

PE: Polyethylene

PP: Polypropylene

## Example 9

The above-mentioned intermediate ply (measuring 5 × 9 cm) obtained in Example 1 was placed on the outer ply composed of 12 μm of PET/45 μm of PE and measuring 7 × 11 cm. Ethylene vinylacetate copolymer (EVA) was deposited on the periphery (10 mm) of the intermediate sheet, and PE non-woven fabric (7 × 11 cm) was set on said EVA ply. The whole laminated mass was thermally pressed at a temperature of 140°C for 5 seconds.

The 3-ply sheet-like oxygen scavenger thus fabricated was sealed in a container containing 0.5 l of air and having a relative humidity of 100% at 25°C. The oxygen content of the container was reduced to 0.1% in 7 hours.

## Claims

1. A sheet-like oxygen scavenger, characterized in that said scavenger comprises a sheet-like mass (10) prepared by paper-making from a mixture of fibrous material, iron powder, water and electrolytic material, characterized in that more than 50% of the iron powder has a particle size of less than 0.05 mm.

2. The oxygen scavenger according to claim 1, characterized in that the air permeability thereof is less than 50,000 sec/air 100 ml in Gurley type air permeability.

3. The oxygen scavenger according to claim 1 or 2, characterized in that the iron powder generally has a particle size less than 0.25 mm.

4. The oxygen scavenger according to any of the claims 1—3, characterized in that the surface of said sheet-like mass (10) is covered with an oxygen-permeable film (11).

5. The oxygen scavenger according to any of the claims 1—3, characterized in that the said sheet-like mass (10) is wrapped in a material (11) having an oxygen permeability much more than $1157.10^{-9}$ m$^3$/m$^2$.s. m$^2$.s.

6. The oxygen scavenger according to any of the claims 1—3, characterized in that at least one side of said sheet-like mass (10) is laminated with a film (11) having an oxygen permeability larger than $1157.10^{-9}$ m$^3$/m$^2$.s.

7. The oxygen scavenger according to claim 1, characterized in that both top and bottom sides of said sheet-like mass (10) are coated with a pair of films (15, 16) having an oxygen permeability larger than $1157.10^{-9}$ m$^3$/m$^2$.s in such a manner than said films protrude from the periphery of said sheet-like mass (10); and said protruding portions are thermally sealed together in order to hermetically seal said sheet-like mass (10).

8. The oxygen scavenger according to any of claims 1—3, characterized in that the sheet-like mass (10) is surrounded with low-melting point resinous material (17), and under this condition, the top and bottom sides of said sheet-like mass (10) are coated with an oxygen-permeable film (18, 19).

9. The oxygen scavenger according to claim 4, characterized in that the oxygen permeable film consists of laminating sheets (13, 14, 14', 20, 21).

10. The oxygen scavenger according to any of the claims 1—9, characterized in that the quantity of iron powder accounts for 10—5000 parts by weight, the quantity of the electrolytic material accounts for 0.01—900 parts by weight, and the quantity of water accounts for 0.1—1,200 parts by weight as against 100 parts by weight of fibrous material.

11. The oxygen scavenger according to any of the claims 1—10, characterized in that the electrolytical material is one selected from the group consisting of sulphates, halogen compounds, carbonates, and hydroxides.

12. A method of manufacturing a sheet-like oxygen scavenger, wherein fibrous material, iron powder, water and electrolytic material are suspended to the extent that the solid concentration accounts for 0.5—1.5% by weight, more than 50% of the iron powder having a particle size of less than 0.05 mm; the suspension is filtered and dehydrated to the extent that the water content is reduced to less than 50%, thereby fabricating the dehydrated mass into a sheet-like oxygen scavenger.

## Patentansprüche

1. Folienartiges Sauerstoffentzugsmittel, dadurch gekennzeichnet, daß das Entzugsmittel eine folienartige Masse (10) umfaßt, die durch Papierherstellung aus einem Gemisch aus Faserstoff, Eisenpulver, Wasser und Elektrolytmaterial hergestellt ist, dadurch gekennzeichnet, daß mehr als 50% des Eisenpulvers eine Teilchengröße von weniger als 0,05 m hat.

2. Sauerstoffentzugsmittel nach Anspruch 1, dadurch gekennzeichnet, daß seine Luftdurchlässigkeit weniger als 50.000 s/100 ml Luft ist, gemessen als Gurley-Luftdurchlässigkeit.

3. Sauerstoffentzugsmittel nach Anspruch 1 oder 2, dadurch gekennzeichnet, daß das Eisenpulver im wesentlichen eine Teilchengröße von weniger als 0,25 mm hat.

4. Sauerstoffentzugsmittel nach einem der Ansprüche 1—3, dadurch gekennzeichnet, daß die Oberfläche der folienartigen Masse (10) von einem sauerstoffdurchlässigen Film (11) überdeckt ist.

5. Sauerstoffentzugsmittel nach einem der Ansprüche 1—3, dadurch gekennzeichnet, daß die folienartige Masse (10) in ein Material (11) gewickelt ist, dessen Sauerstoffdurchlässigkeit wesentlich höher als $1157.10^{-9}$ m$^3$/m$^2$.s ist.

6. Sauerstoffentzugsmittel nach einem der Ansprüche 1—3, dadurch gekennzeichnet, daß wenigstens eine Seite der folienartigen Masse (10) mit einem Film (11) mit einer Sauerstoffdurchlässigkeit von mehr als 1157.10⁻⁹ m³/m².s laminiert ist.

7. Sauerstoffentzugsmittel nach Anspruch 1, dadurch gekennzeichnet, daß Ober- und die Unterseite der folienartigen Masse (10) mit zwei Filmen (15, 16) mit einer Sauerstoffdurchlässigkeit von mehr als 1157.10⁻⁹ m³/m².s so beschichtet sind, daß die Filme vom Rand der folienartigen Masse (10) vorstehen; und die vorstehenden Abschnitte miteinander thermoverschweißt sind, um die folienartige Masse (10) hermetisch dicht zu machen.

8. Sauerstoffentzugsmittel nach einem der Ansprüche 1—3, dadurch gekennzeichnet, daß die folienartige Masse (10) von einem niedrigschmelzenden Harzstoff (17) umgeben ist, und unter dieser Bedingung die Ober- und die Unterseite der folienartigen Masse (10) mit einem sauerstoffdurchlässigen Film (18, 19) beschichtet sind.

9. Sauerstoffentzugsmittel nach Anspruch 1, dadurch gekennzeichnet, daß der sauerstoffdurchlässige Film aus Laminierfolien (13, 14, 14', 20, 21) besteht.

10. Sauerstoffentzugsmittel nach einem der Ansprüche 1—9, dadurch gekennzeichnet, daß die Eisenpulvermenge 10—5000 Gewichsteile, die Elektrolytmaterialmenge 0,01—900 Gewichsteile und die Wassermenge 0,1—1200 Gewichsteile pro 100 Gewichsteilen Faserstoff beträgt.

11. Sauerstoffentzugsmittel nach einem der Ansprüche 1—10, dadurch gekennzeichnet, daß das Elektrolytmaterial ein Sulfat, eine Halogenverbindung, ein Carbonat oder ein Hydroxid ist.

12. Verfahren zur Herstellung eines folienartigen Sauerstoffentzugsmittels, wobei Faserstoff, Einespulver, Wasser und Elektrolytmaterial in einem Maß suspendiert werden, daß die Feststoffkonzentration 0,5—15 Gew.-% beträgt, wobei mehr als 50% des Eisenpulvers eine Teilchengröße von weniger als 0,05 mm hat; die Suspension in einem Maß filtriert und entwässert wird, daß der Wassergehalt auf weniger als 50% gesenkt, so daß aus der entwässerten Masse ein folienartiges Sauerstoffentzugsmittel gebildet wird.

## Revendications

1. Un agent adsorbant l'oxygène, en forme de feuille, caractérisé en ce que ledit agent adsorbant comprend und masse (10) en feuille préparée par fabrication d'un papier à partir d'un mélange de matière fibreuse, de poudre de fer, d'eau et de matière électrolytique, caractérisé en ce que plus de 50% de la poudre de fer a une dimension de particule de moins de 0,05 mm.

2. L'agent adsorbant l'oxygène selon la revendication 1, caractérisé en ce que sa perméabilité à l'air Gurley est de moins de 50 000 s/100 ml d'air.

3. L'agent adsorbant l'oxygène selon la revendication 1 ou 2, caractérisé en ce que la poudre de fer a généralement une dimension de particule de moins de 0,25 mm.

4. L'agent adsorbant l'oxygène selon l'une quelconque des revendications 1 à 3, caractérisé en ce que la surface de ladite masse (10) en feuille est recouverte par un film (11) perméable à l'oxygène.

5. L'agent adsorbant l'oxygène selon l'une quelconque des revendications 1 à 3, caractérisé en ce que ladite masse en feuille (10) est enveloppée dans une matière (11) ayant une perméabilité à l'oxygène très supérieure à 1 157.10⁻⁹ m³/m².s.

6. L'agent adsorbant l'oxygène selon l'une quelconque des revendications 1 à 3, caractérisé en ce qu'au moins une face de ladite masse en feuille (10) est stratifiée avec un film (11) ayant une perméabilité à l'oxygène de plus de 1 157.10⁻⁹ m³/m².s.

7. L'agent adsorbant l'oxygène selon la revendication 1 caractérisé en ce que les faces supérieure et inférieure de ladite masse en feuille (10) sont toutes deux revêtues avec une paire de films (15, 16) ayant une perméabilité à l'oxygène de plus de 1 157.10⁻⁹ m³/m².s de maînère que lesdits films dépassent de la périphérie de ladite masse en feuille (10); et lesdites portions dépassant sont soudées thermiquement ensemble afin de fermer hermétiquement ladite masse en feuille (10).

8. L'agent adsorbant l'oxygène selon l'une quelconque des revendications 1 à 3, caractérisé en ce que la masse en feuille (10) est entourée par une matière résineuse (17) de bas point de fusion et, dans ces conditions, les faces supérieure et inférieure de ladite masse en feuille (10) sont revêtues avec un film perméable à l'oxygène (18, 19).

9. L'agent adsorbant l'oxygène selon la revendication 4, caractérisé en ce que le film perméable à l'oxygène consiste en feuilles stratifiées (13, 14, 14', 20, 21).

10. L'agent adsorbant l'oxygène selon l'une quelconque des revendications 1 à 9, caractérisé en ce que la quantité de poudre de fer de 10—5 000 parties en poids, la quantité de la matière électrolytique de 0,01—900 parties en poids et la quantité d'eau de 0,1—1 200 parties en poids pour 100 parties en poids de matière fibreuse.

11. L'agent adsorbant l'oxygène selon l'une quelconque des revendications 1 à 10, caractérisé en ce que la matière électrolytique est choisie parmi les sulfates, les composés halogénés, les carbonates et les hydroxydes.

12. Un procédé de fabrication d'un agent adsorbant l'oxygène, en forme de feuille, dans lequel une matière fibreuse, de la poudre de fer, de l'eau et une matière électrolytique sont mises en suspension à un degré tel que la concentration en solides soit de 0,5—15% en poids, plus de 50% de la poudre de fer ayant une dimension de particule de moins de 0,05 mm; la suspension soit filtrée et déshydratée à un degré tel que la teneur en eau est réduite à moins de 50%, en transformant ainsi la masse déshydratée en un agent adsorbant l'oxygène en forme de feuille.

F I G. 1

F I G. 2

F I G. 3

F I G. 4

F I G. 5

F I G. 6

F I G. 7